# EUROPEAN PATENT APPLICATION

(11) **EP 4 657 776 A1**
(43) Date of publication of application: **03.12.2025**
(21) Application number: 24904020.5
(22) Date of filing: 19.11.2024
(51) Int. Cl.: H04B 17/318, H01M 10/42, H04W 24/08, H04L 43/0823

(54) **METHOD FOR DIAGNOSING QUALITY OF WIRELESS COMMUNICATION, AND BATTERY MANAGEMENT SYSTEM FOR PROVIDING METHOD**

(30) Priority: 13.12.2023 KR 20230180808; 19.04.2024 KR 20240052987
(71) Applicant: LG Energy Solution, Ltd., Seoul 07335 (KR)
(72) Inventor: JEON, Younghwan, Daejeon 34122 (KR)
(74) Representative: Goddar, Heinz J.
(86) International application number: PCT/KR2024/018211
(87) International publication number: WO 2025/127454

(57) **Abstract**

The present disclosure relates to a diagnostic method for radio communication quality and a battery management system providing the same. The battery management system according to an exemplary embodiment of the present disclosure may include a communication unit that receives a radio signal including battery information; an RSSI measurement unit that measures a received signal strength indicator (RSSI) of the radio signal; a preprocessing unit that calculates an average for the RSSI for each measurement cycle and calculates a moving average for each measurement cycle based on averages for a predetermined number of measurement cycles for each measurement cycle to derive a compensated RSSI; and a quality diagnosis unit that diagnoses radio communication quality based on the compensated RSSI.

## Description

### [Technical Field]

### CROSS-REFERENCE TO RELATED APPLICATION

This application claims priority to and the benefit of Korean Patent Application Nos. 10-2023-0180808 and 10-2024-0052987 filed in the Korean Intellectual Property Office on December 13, 2023 and April 19, 2024, the entire contents of which are incorporated herein by reference.

The present disclosure relates to a diagnostic method for radio communication quality and a battery management system providing the method.

### [Background Art]

A battery pack product used in an electric vehicle reads data with a CVTN ASIC, transmits data in a daisy chain manner, and transmits cell information to a battery management system (BMS) through SPI communication. However, in the case of a wireless BMS, cell data is transmitted to the BMS through RF communication rather than SPI communication. Conventionally, a diagnostic method for SPI communication quality through DTC diagnosis when there is a deterioration in the SPI communication quality has been disclosed. However, there is no diagnostic method for radio communication quality of a BMS. Unlike the existing radio communication, in the case of a vehicle directly connected to the safety of a driver, a reaction through the diagnosis of the radio communication quality is important.

### [Disclosure]

### [Technical Problem]

The present disclosure attempts to provide a diagnostic method for radio communication quality of a battery management system and a battery management system providing the method.

### [Technical Solution]

According to an exemplary embodiment of the present disclosure, a battery management system may include: a communication unit that receives a radio signal including battery information; an RSSI measurement unit that measures a received signal strength indicator (RSSI) of the radio signal; a preprocessing unit that calculates an average for the RSSI for each measurement cycle and calculates a moving average for each measurement cycle based on averages for a predetermined number of measurement cycles for each measurement cycle to derive a compensated RSSI; and a quality diagnosis unit that diagnoses radio communication quality based on the compensated RSSI.

The communication unit may transmit the radio signal to the RSSI measurement unit when the number of battery information divided into unit packets is greater than or equal to a reference number.

The preprocessing unit may calculate an average for RSSI of the first measurement cycle as an average value of a first average before the first measurement cycle and a second average after the first measurement cycle when a missing value for the RSSI occurs in the first measurement cycle for each measurement cycle.

The preprocessing unit may increase a fail count by 1 when there is no RSSI received from the RSSI measurement unit for each measurement cycle, and decrease the fail count by 1 when there is RSSI received from the RSSI measurement unit for each measurement cycle.

The quality diagnose unit may diagnose that a communication error has occurred when the fail count is equal to or greater than a predetermined number.

The quality diagnosis unit may diagnose that radio communication quality is in a normal state when the compensated RSSI exceeds a first reference value.

The quality diagnosis unit may diagnose that radio communication quality is in a dangerous state when a pre-danger state in which the compensated RSSI is less than or equal to the first reference value and exceeds a second reference value that is less than the first reference value is maintained for a predetermined period of time.

The quality diagnosis unit may diagnose that the radio communication quality is in a fault state when a preliminary fault state in which the compensated RSSI is less than or equal to the second reference value is maintained for a predetermined period of time.

According to another exemplary embodiment of the present disclosure, a diagnostic method for radio communication quality may include: receiving, by a communication unit, a radio signal including battery information; measuring, by an RSSI measurement unit, a received signal strength indicator (RSSI) of the radio signal; calculating, by a preprocessing unit, an average for the RSSI for each measurement cycle and calculates a moving average for each measurement cycle based on averages for a predetermined number of measurement cycles for each measurement cycle to derive a compensated RSSI; and diagnosing, by a quality diagnosis unit, radio communication quality based on the compensated RSSI.

The receiving of the radio signal may include transmitting the radio signal to the RSSI measurement unit when the number of battery information divided into unit packets is greater than or equal to a reference number.

The deriving of the compensated RSSI may include calculating an average for RSSI of the first measurement cycle as an average value of a first average before the first measurement cycle and a second average after the first measurement cycle when a missing value for the RSSI occurs in the first measurement cycle for each measurement cycle.

The deriving of the compensated RSSI may include increasing a fail count by 1 when there is no RSSI received from the RSSI measurement unit for each measurement cycle; and decreasing a fail count by 1 when there is RSSI received from the RSSI measurement unit for each measurement cycle.

The diagnosing of the radio communication quality may include diagnosing that a communication error has occurred when the fail count is equal to or greater than a predetermined number.

The diagnosing of the radio communication quality may include diagnosing that radio communication quality is in a normal state when the compensated RSSI exceeds a first reference value; increasing a warning count by 1 when the compensated RSSI is less than or equal to the first reference value; diagnosing that the radio communication quality is in a dangerous state when the warning count is greater than or equal to a predetermined number; increasing a fault count by 1 when the compensated RSSI is less than or equal to a second reference value that is less than the first reference value; and diagnosing that the radio communication quality is in a fault state when the fault count is greater than or equal to the predetermined number.

### [Advantageous Effects]

According to an exemplary embodiment of the present disclosure, it is possible to accurately diagnose the communication quality between the BMSs

In addition, by monitoring the radio communication quality, it is possible to prevent problems that are caused by the data not being received due to the communication errors in the early stage.

In addition, it is possible to solve the time imbalance for the determination target when determining the radio communication quality, diagnose the radio communication quality even when the temporary communication failure occurs, and reduce the influence of noise that may be included in the radio signal, thereby improving the reliability of data and the accuracy of determination of the radio communication quality.

Effects which can be achieved by the present disclosure are not limited to the above-described effects. That is, other objects that are not described may be obviously understood by those skilled in the art to which the present disclosure pertains from the following description.

### [Description of the Drawings]

FIG. 1 is a block diagram of a battery system according to an exemplary embodiment of the present disclosure.
FIG. 2 is a block diagram of a master BMS according to an exemplary embodiment of the present disclosure.
FIGS. 3 and 4 are diagrams for describing a preprocessing unit according to an exemplary embodiment of the present disclosure.
FIG. 5 is a flowchart of a diagnostic method for radio communication quality according to an exemplary embodiment of the present disclosure.
FIG. 6 is a flowchart of a step of diagnosing radio communication quality according to an exemplary embodiment of the present disclosure.

### [Mode for Invention]

When it is decided that a detailed description for the known art related to embodiments disclosed in the present specification may obscure the gist of the embodiments disclosed in present specification, the detailed description will be omitted. Further, it should be understood that the accompanying drawings are provided only in order to allow exemplary embodiments of the present disclosure to be easily understood, and the spirit of the present disclosure is not limited by the accompanying drawings, but includes all the modifications, equivalents, and substitutions included in the spirit and the scope of the present disclosure.

Terms including an ordinal number such as first, second, etc., may be used to describe various components, but the components are not limited to these terms. The above terms are used solely for the purpose of distinguishing one component from another.

In the present specification, it is to be understood that when one component is referred to as being "connected to" or "coupled to" another component, it may be connected or coupled directly to another component or be connected to another component with the other component interposed therebetween. On the other hand, it should be understood that when one element is referred to as being "connected directly to" or "coupled directly to" another element, it may be connected to or coupled to another element without the other element interposed therebetween.

It will be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

The present disclosure will be described in detail below with reference to the attached drawings.

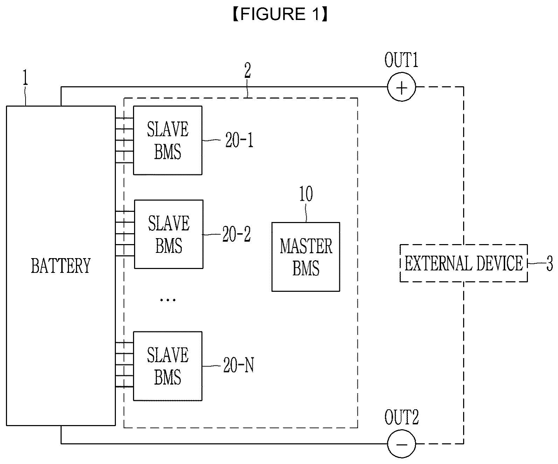

FIG. 1 is a block diagram of a battery system according to an exemplary embodiment of the present disclosure.

Referring to FIG. 1, a battery system according to an exemplary embodiment of the present disclosure may include a battery 1 and a battery management system (hereinafter referred to as "BMS") 2.

The battery 1 is connected between two output terminals OUT1 and OUT2 of the battery system. A relay (not illustrated) may be connected between a positive electrode of the battery system and the first output terminal OUT1, and a current sensor (not illustrated) may be connected between a negative electrode of the battery system and the second output terminal OUT2. In the present disclosure, a potential of the positive electrode is higher than that of the negative electrode.

According to an exemplary embodiment, the battery 1 may include a plurality of battery modules connected in series and/or in parallel. In this case, each of the plurality of battery modules may include a plurality of battery cells electrically connected in series and in parallel. In an embodiment, the battery cell may be a rechargeable secondary battery.

The relay acts as a kind of switch that controls the electrical connection between the battery system and an external device 3. When the relay is turned on, the battery 1 and the external device 3 are electrically connected to perform charging or discharging. When the relay is turned off, the battery system and the external device 3 are electrically separated. In this case, the external device 3 may be a charger in a charging cycle in which power is supplied to the battery 1 to charge the battery 1, and a load in a discharging cycle in which the battery 1 discharges power to the external device 3.

The BMS 3 may include at least one slave BMS 20-1 to 20-N and a master BMS 10. The plurality of slave BMSs 20-1 to 20-N and the master BMS 10 may transmit and receive signals to and from a radio communication method. Hereinafter, the plurality of slave BMSs 20-1 to 20-N are collectively described as a slave BMS 20.

For example, the slave BMS 20 may measure the state of the battery 1 to generate battery information. The battery information means information indicating the state of the battery 1. The slave BMS 20 may wirelessly transmit each of the plurality of sensing signals including the battery information to the master BMS 10. In addition, the master BMS 10 may generate a control signal based on the sensing signal and wirelessly transmit the control signal to the slave BMS 20. According to an exemplary embodiment, the slave BMS 20 may include a communication module.

According to an exemplary embodiment, the battery information may include information (e.g., cell current, cell voltage, cell temperature, etc.) measured by the slave BMS 20 and estimated information (e.g., state of charge (SOC), state of health (SOH)).

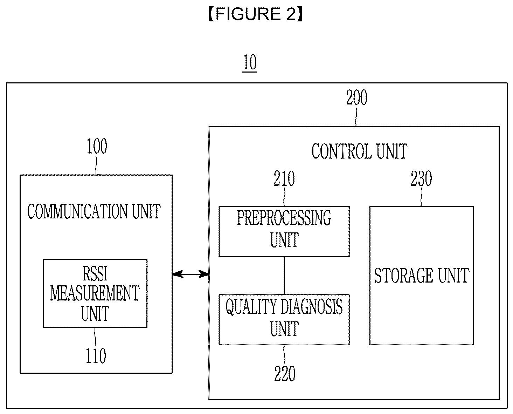

FIG. 2 is a block diagram of a master BMS 10 according to an exemplary embodiment of the present disclosure.

Referring to FIG. 2, the master BMS 10 according to an exemplary embodiment of the present disclosure may include a communication unit 100 and a control unit 200. According to an exemplary embodiment, the communication unit 100 may include an RSSI measurement unit 110, and the control unit 200 may include a preprocessing unit 210, a quality diagnosis unit 220, and a storage unit 230.

The communication unit 100 may perform radio communication with the slave BMS 20 to receive a radio signal including battery information. For example, the communication unit 100 may receive the radio signal including the battery information from the slave BMS 20.

The communication unit 100 may transmit the received battery information to the external device 3, or transmit an alarm signal generated by the control unit 200 through analysis of the battery information to the external device 3. According to an exemplary embodiment, the external device 3 may be a higher system such as an electric vehicle, an energy storage system (ESS), etc.

According to an exemplary embodiment, the communication unit 100 may perform radio communication with the slave BMS 20 and the external device 3 through radio frequency (RF), near field communication (NFC), Bluetooth, Wi-Fi, ZigBee, etc.

According to an exemplary embodiment, the battery information may be divided into a plurality of data packets and received from the slave BMS 20. For example, one radio signal received by the communication unit 100 may include at least one or more data packets, and a bundle of the plurality of data packets received by the communication unit 100 may be for one battery information.

The communication unit 100 may include an RSSI measurement unit 110 that measures the received signal strength (hereinafter, referred to as 'RSSI') of the radio signal. The RSSI measurement unit 110 may be a signal strength measurement module that measures the RSSI corresponding to the signal strength received by the communication unit 100 via the radio communication. The RSSI measurement unit 110 may measure the RSSI of the radio signal by various methods known in the art. In FIG. 1, the RSSI measurement unit 110 is illustrated as being located within the communication unit 100, but the location of the RSSI measurement unit 110 is not limited thereto and may be located anywhere within the master BMS 10.

The RSSI measurement unit 110 may measure the RSSI by measuring the power present in the received radio signal. The measurement unit of the RSSI may be expressed as a power level unit [dBm]. For example, the RSSI may be expressed as a 'negative value [dBm]', and the closer the RSSI is to '0 [dBm]', the stronger the signal is.

According to an exemplary embodiment, the communication unit 100 may transmit the received radio signal to the RSSI measurement unit 110 when a predetermined diagnostic condition is satisfied. For example, the communication unit 100 provides the received radio signal to the RSSI measurement unit 110 when the predetermined diagnostic condition is satisfied. The RSSI measurement unit 110 measures the RSSI for the radio signal and transmits the measured RSSI to the control unit 200. The control unit 200 diagnoses the radio communication quality using the RSSI

According to an exemplary embodiment, the predetermined diagnostic condition may correspond to the number of battery information divided into unit packets being greater than or equal to a reference number. For example, when the number of battery information divided into unit packets received by the communication unit 100 exceeds the reference number (for example, 1,000), the communication unit 100 may provide the radio signals received thereafter to the RSSI measurement unit 110. Then, the RSSI measurement unit 110 measures the RSSI and transmits the measured RSSI to the control unit 200. The control unit 200 may diagnose radio communication quality using the RSSI.

Accordingly, by performing the quality diagnosis process of the radio communication after the radio communication is stabilized, it is possible to improve the effectiveness of the radio communication quality diagnosis. This is because, in order to obtain meaningful diagnosis results in the radio communication quality diagnosis, the number of data packets received through the communication unit 100 should be sufficiently accumulated.

The preprocessing unit 210 may generate a compensated RSSI for evaluating the radio communication quality based on the RSSI. The preprocessing unit 210 may perform preprocessing, which includes average calculation, missing value correction, and moving average, on the RSSI to derive the compensated RSSI. Here, the compensated RSSI may be used to determine the radio communication quality. Meanwhile, the preprocessing process that the preprocessing unit 210 performs on the RSSI is not limited to the average calculation, the missing value correction, and the moving average, and other preprocessing processes may be additionally performed in addition to the average calculation, the missing value correction, and the moving average.

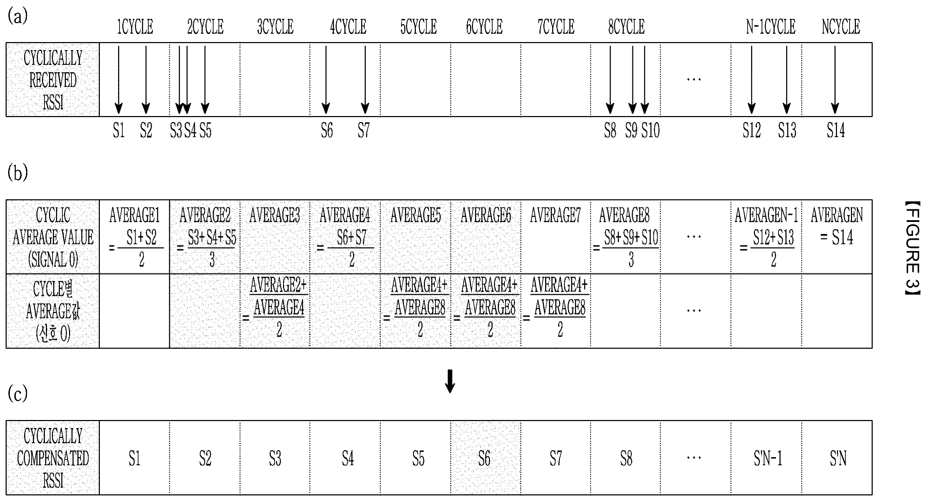

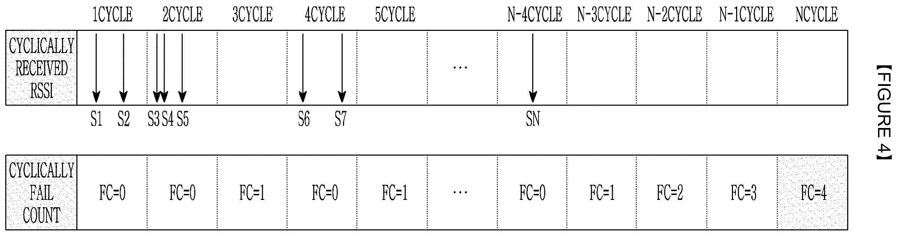

Hereinafter, the process of the preprocessing unit 210 preprocessing the RSSI to derive the compensated RSSI will be described in detail with reference to FIGS. 3 and 4.

The quality diagnosis unit 220 may diagnose the radio communication quality based on the compensated RSSI.

The quality diagnosis unit 220 may determine the radio communication quality as a normal state, a dangerous state, or a fault state. Here, the normal state means a state in which the radio communication quality is good. The dangerous state means an abnormal state in which the radio communication is not good, but may be restored to the normal state when certain measures, such as increasing the power supplied to the communication unit 100, are taken. The fault state means the abnormal state in which the radio communication is not good, and may be restored to a state in which radio communication is not possible. In this case, an emergency shutdown of a higher system (e.g., a vehicle, etc.) equipped with the master BMS 10 according to an exemplary embodiment of the present disclosure may be required.

The quality diagnosis unit 220 may diagnose the radio communication quality based on whether the compensated RSSI is greater than or equal to a preset reference value and/or falls within a preset range.

According to an exemplary embodiment, the quality diagnosis unit 220 may diagnose that the radio communication is in the normal state when the compensated RSSI exceeds a first reference value. The quality diagnosis unit 220 may diagnose that the radio communication is in a dangerous state when the compensated RSSI is in a pre-dangerous state that is less than or equal to the first reference value but exceeds a second reference value for a predetermined period of time. The quality diagnosis unit 220 may diagnose that the radio communication is in the fault state when a preliminary fault state in which the compensated RSSI is less than or equal to the second reference value is maintained for the predetermined period of time. In this case, the first reference value and the second reference value may be determined based on a power level range that the compensated RSSI may have, and the first reference value is greater than the second reference value.

The quality diagnosis unit 220 may count the period of time during which the pre-dangerous state and the preliminary fault state are maintained, respectively, in order to determine the dangerous state and the fault state, respectively. The quality diagnosis unit 220 may determine the radio communication quality based on whether the count value of the preliminary fault state (hereinafter, fault count) and the count value of the preliminary dangerous state (hereinafter, warning count) are greater than or equal to a predetermined number. The fault count and the warning count may be integers greater than or equal to 0.

That is, the quality diagnosis unit 220 may improve the accuracy of the diagnosis of the radio communication quality by finally performing the determination on the radio communication quality when the result of counting the state in which the compensated RSSI is out of the reference range is greater than or equal to a predetermined number of times, that is, when the preliminary dangerous state or the preliminary fault state is maintained for the predetermined period of time. For example, even when the compensated RSSI is less than or equal to the first reference value and exceeds the second reference value, when the warning count is not greater than or equal to a predetermined number (for example, 3), the radio communication may be determined not to be in a 'dangerous state'.

According to an exemplary embodiment, the quality diagnosis unit 220 may diagnose that the radio communication is in the normal state when the compensated RSSI exceeds the first reference value. The quality diagnosis unit 220 may increase the warning count by 1 when the compensated RSSI is less than or equal to the first reference value. The quality diagnosis unit 220 may diagnose that the radio communication quality is in the dangerous state when the warning count is a predetermined number or more. The quality diagnosis unit 220 may increase the fault count by 1 when the compensated RSSI is less than or equal to a second reference value that is less than the first reference value. The quality diagnosis unit 220 may diagnose that the radio communication quality is in the fault state when the fault count is a predetermined number or more. Here, the predetermined number for the warning count and fault count may be preset by the user and stored in the storage unit 230.

For example, it is assumed that the first reference value is -80dBm, the second reference value is -85dBm, the predetermined number N is 3, and both the warning count and fault count currently recorded in the storage unit 230 are 2.

In the above example, when the preprocessing unit 210 determines that the compensated RSSI is -83dBm, the quality diagnosis unit 220 may increase the warning count to 3 and then diagnose that the radio communication is in the 'dangerous state'.

Alternatively, in the above example, when the preprocessing unit 210 determines that the compensated RSSI is -83dBm, the quality diagnosis unit 220 may increase the warning count to 3, increase the fault count to 3, and then diagnose that the radio communication is in the 'fault state'.

The storage unit 230 may store battery data received through the communication unit 100, the first reference value, the second reference value, a fail count, the warning count, and the fault count, etc., used as a reference for diagnosing the radio communication quality. Here, the fail count may be used to determine whether the radio communication is not performed. Here, the first reference value and the second reference value are the reference compared with the compensated RSSI, and may be determined based on the power level range that the compensated RSSI may have, and the first reference value is greater than the second reference value.

FIG. 3 is a diagram for describing a preprocessing unit 210 according to an exemplary embodiment of the present disclosure.

Referring to FIG. 3, the preprocessing unit 210 may receive RSSI (S1 to S14) from the RSSI measurement unit 110 for each unit time (hereinafter, measurement cycle) and calculate an average value of the RSSI for each measurement cycle.

The radio signals received from the slave BMS 20 to the master BMS 10 may be received at irregular time intervals. Accordingly, as illustrated in FIG. 3A, the RSSIs S1 to S14 received from the RSSI measurement unit 110 to the preprocessing unit 210 may also be received at irregular time intervals.

In this case, when the quality diagnosis unit 220 diagnoses the radio communication quality for each measurement cycle, there may be a difference in the number of RSSIs received for each measurement cycle, and thus the imbalance may occur in the determination target when determining the radio communication quality. For example, two RSSIs S1 and S2 may be received in the measurement cycle "1 cycle", and three RSSIs S3, S4, and S5 may be received in the measurement cycle "2 cycles".

Accordingly, the master BMS 10 according to an exemplary embodiment of the present disclosure calculates an average value of the RSSIs S1 to S14 received by the preprocessing unit 210 for each measurement cycle and uses the calculated average value to diagnose the radio communication quality, thereby eliminating time imbalance for the determination target when diagnosing the radio communication quality.

Since the radio signals received by the communication unit 100 of the master BMS 10 are received irregularly, the radio signals may not be received in some measurement cycles. Accordingly, as illustrated in FIGS. 3A and 3B, in the measurement cycles in which the radio signals are not received, there may be no value provided by the RSSI measurement unit 110 to the preprocessing unit 210.

For example, although the radio communication is not impossible as in S5 and S6 of FIG. 3A, when the radio communication environment is temporarily unstable, the reception time interval between the radio signals received from the slave BMS 20 may become longer. In this case, when the reception time interval between the radio signals is longer than the unit time for diagnosing the radio communication quality in the quality diagnosis unit 220, there may be a case where there is no RSSI received by the preprocessing unit 210 as in the measurement cycle "3 cycles" of FIG. 3A. In this case, the missing value occurs in the average value of the RSSIs. When the missing value occurs in the RSSI average value, the quality diagnosis unit 220 may not determine the radio communication quality because there is no determination target used to determine the radio communication quality. In other words, there may be a case where it is impossible to determine the radio communication quality due to a temporary communication failure.

Accordingly, the master BMS 10 according to an exemplary embodiment of the present disclosure performs the missing value correction for the missing value through the preprocessing unit 210, thereby making it possible to diagnose the radio communication quality even when the temporary communication failure occurs.

According to an exemplary embodiment, when there is the missing value in the average value of RSSI, the preprocessing unit 210 may calculate an average of the average values of the RSSIs calculated before and after the missing value to replace the missing value. For example, as illustrated in FIG. 3B, when there is the missing value (average 3) in the average value of the RSSI, the average of the average value (average 2) of the RSSI calculated before the missing value (average 3) and the average value (average 4) of the RSSI calculated after the missing value (average 3) may be calculated to replace the missing value (average 3).

In addition, as another example, as illustrated in FIG. 3B, when a plurality of missing values (averages 5, 6, 7) are continuously present in the average value of the RSSI, the average of the average value (average 4) of the RSSI calculated before the missing values (averages 5, 6, 7) and the average value (average 8) of the RSSI calculated after the plurality of missing values (average 5, 6, 7) may be calculated to replace the plurality of missing values (averages 5, 6, 7), respectively.

Referring to FIGS. 3B and 3C, the preprocessing unit 210 may derive the compensated RSSI by applying a moving average filter to the RSSI average values.

Here, the moving average filter is a filter used to analyze data by creating a series of averages for several subsets of the entire data set, and corresponds to an impulse response filter type.

That is, the preprocessing unit 210 may derive a series of averages for some of the RSSI average values that are continuously received for each unit time by applying the moving average filter to the RSSI average values.

For example, the preprocessing unit 210 may calculate the average of the RSSI average values for multiple measurement cycles "2 cycles to 6 cycles" from "2 cycles" to "6 cycles", which is n (for example, 4) previous measurement cycles, from "6 cycles" to derive compensated RSSI S'6 for the measurement cycle "6 cycles" of FIG. 2.

The radio signals received through the radio communication may include noise caused by internal or external obstacles. When calculating the RSSI average value through the preprocessing unit 210 for radio signals containing noise, the RSSI average value may have a relatively large or small value compared to other average values. In other words, the RSSI average value may also include noise. When the noise included in the RSSI average value is not corrected and the compensated RSSI is derived and then the radio communication quality is determined, the accuracy of the radio communication quality determination may decrease.

Accordingly, as illustrated in FIG. 3C, the master BMS 10 according to an exemplary embodiment of the present disclosure applies the moving average filter through the preprocessing unit 210 to reduce the influence of noise that may be included in the radio signal, thereby improving the reliability of data and the accuracy of the radio communication quality determination.

FIG. 4 is a diagram for describing the preprocessing unit 210 according to an exemplary embodiment of the present disclosure.

Referring to FIG. 4, the preprocessing unit 210 may increase or decrease the fail count based on the presence or absence of RSSI received from the RSSI measurement unit 110 for each unit time.

Here, the fail count corresponds to the number of times that the RSSI is not received from the RSSI measurement unit 110 for each unit time, and is an integer greater than or equal to 0. The fail count is used to determine the state in which the communication error occurs in which the radio communication is not performed, i.e., the state in which the radio communication is impossible. According to an exemplary embodiment, the fail count may be recorded in the storage unit 230.

According to an exemplary embodiment, the preprocessing unit 210 may increase the fail count by 1 when there is no RSSI received from the RSSI measurement unit 110 during the measurement cycle, and may decrease the fail count by 1 when there is RSSI received from the RSSI measurement unit 110 during the measurement cycle.

For example, as illustrated in FIG. 4, the preprocessing unit 210 may increase the fail count by 1 (FC=1) in "cycle 3" where the RSSI does not exist, and decrease the fail count by 1 (FC=0) in "cycle 4" where the RSSI exists. In addition, when the RSSI does not exist in consecutive cycles N-3 to N, the preprocessing unit 210 may continuously increase the fail count by 1 for each measurement cycle (FC=1 to 4).

According to an exemplary embodiment, the quality diagnosis unit 220 may determine whether the communication error has occurred based on whether the fail count is greater than or equal to a predetermined number before diagnosing the radio communication quality based on the compensated RSSI derived through the preprocessing unit 210.

For example, in FIG. 3, the quality diagnosis unit 220 may determine whether the fail count is greater than or equal to 4 at regular intervals. In addition, the quality diagnosis unit 220 may determine that the communication error has occurred in N intervals in which the fail count is greater than or equal to 4.

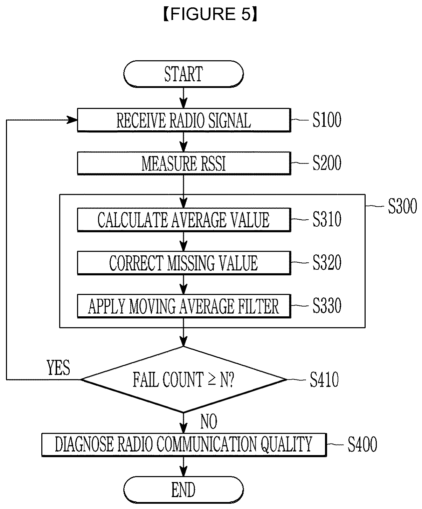

FIG. 5 is a flowchart of a method of diagnosing radio communication quality according to an exemplary embodiment of the present disclosure.

Referring to FIG. 5, the diagnostic method for radio communication quality according to an exemplary embodiment of the present disclosure may include a radio signal receiving step (S100), an RSSI measurement step (S200), an RSSI preprocessing step (S300), and a radio communication quality diagnosis step (S400).

In the radio signal receiving step (S100), the communication unit 100 may perform the radio communication with the slave BMS 20 to receive the radio signal including the battery information. For example, the communication unit 100 may receive the radio signal including the battery information from the slave BMS 20.

According to an exemplary embodiment, in the radio signal receiving step (S100), when the predetermined diagnostic condition is satisfied, the communication unit 100 may transmit the received radio signal to the RSSI measurement unit 110. For example, the communication unit 100 provides the received radio signal to the RSSI measurement unit 110 when the predetermined diagnostic condition is satisfied.

According to an exemplary embodiment, the predetermined diagnostic condition may correspond to the number of battery information divided into unit packets being greater than or equal to a reference number. For example, when the number of battery information divided into unit packets received by the communication unit 100 exceeds the reference number (for example, 1,000), the communication unit 100 may provide the radio signals received thereafter to the RSSI measurement unit 110.

In the RSSI measurement step (S200), the RSSI measurement unit 110 may measure the RSSI of the radio signal. In this case, the RSSI measured by the RSSI measurement unit 110 may be transmitted to the control unit 200.

Here, the received signal strength indicator (RSSI) is a value that measures the power present in the received radio signal, and the measurement unit of the RSSI may be expressed as a power level unit [dBm]. For example, the RSSI may be expressed as a 'negative value [dBm]', and the closer the RSSI is to '0 [dBm]', the stronger the signal is.

In the RSSI preprocessing step (S300), the preprocessing unit 210 may perform the preprocessing including the average calculation, the missing value correction, and the moving average on the RSSI to derive the compensated RSSI. Here, the compensated RSSI may be used to determine the radio communication quality.

For example, in the RSSI preprocessing step (S300), the preprocessing unit 210 may receive the RSSI from the RSSI measurement unit 110 for each unit time, and calculate the average value of the RSSI for each unit time (S310). When there is the missing value in the calculated RSSI average value, the preprocessing unit 210 may calculate the average of the RSSI average values calculated before and after the missing value to replace the missing value (S320). In addition, the preprocessing unit 210 may derive the compensated RSSI by applying the moving average filter to the RSSI average value (S330).

Accordingly, the master BMS 10 according to an exemplary embodiment of the present disclosure may resolve time imbalance for a determination target when determining the radio communication quality, diagnose the radio communication quality even when the temporary communication failure occurs, and reduce the influence of noise that may be included in the radio signal to improve the reliability of data and the accuracy of the radio communication quality determination.

According to an exemplary embodiment, the RSSI preprocessing step (S300) may include a step of increasing or decreasing the fail count based on the presence or absence of the RSSI received from the RSSI measurement unit 110 for the unit time. For example, in the RSSI preprocessing step (S300), the preprocessing unit 210 may include a step of increasing the fail count by 1 when there is no RSSI received from the RSSI measurement unit 110 for the unit time, and a step of decreasing the fail count by 1 when there is the compensated RSSI generated through the RSSI measurement unit 110 for the unit time. In this case, in the radio communication quality diagnosis step (S400), the quality diagnosis unit 220 may include a step (S410) of diagnosing that the communication error has occurred when the fail count is a predetermined number or more.

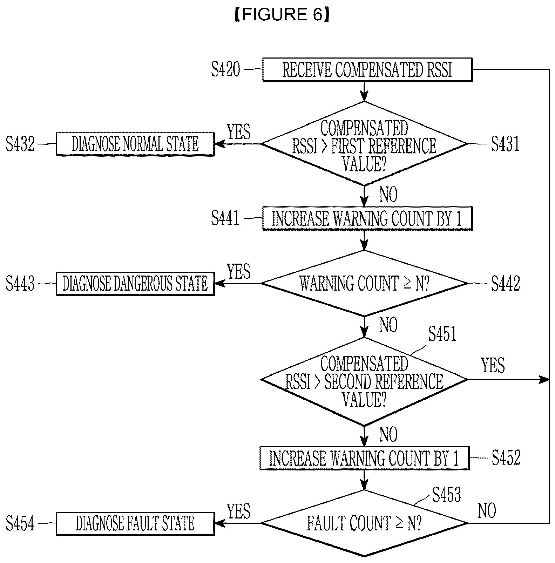

In the radio communication quality diagnosis step (S400), the quality diagnosis unit 220 may diagnose the radio communication quality based on the compensated RSSI. Hereinafter, the radio communication quality diagnosis step (S400) according to an exemplary embodiment of the present disclosure will be described in detail with reference to FIG. 6.

Referring to FIG. 6, in the radio communication quality diagnosis step (S400) according to an exemplary embodiment of the present disclosure, the quality diagnosis unit 220 may diagnose the radio communication quality based on whether the compensated RSSI is equal to or greater than the preset reference value and/or falls within the preset range.

According to an exemplary embodiment, the radio communication quality diagnosis step (S400) may include a step in which the quality diagnosis unit 220 diagnoses that the radio communication is in the normal state when the compensated RSSI exceeds the first reference value, a step in which the radio communication is in the dangerous state when the preliminary dangerous state in which the compensated RSSI is less than or equal to the first reference value but exceeds the second reference value is maintained for the predetermined period of time, and a step in which the radio communication is in the fault state when the preliminary fault state in which the compensated RSSI is less than or equal to the second reference value is maintained for the predetermined period of time. In this case, the first reference value and the second reference value may be determined based on the power level range that the compensated RSSI may have, and the first reference value is greater than the second reference value.

According to an exemplary embodiment, the radio communication quality diagnosis step (S400) may include a step in which the quality diagnosis unit 220 counts the period during which the preliminary dangerous state and the preliminary fault state are maintained, respectively, in order to determine the dangerous state and the fault state, respectively.

According to an exemplary embodiment, the radio communication quality diagnosis step (S400) may include a step in which the quality diagnosis unit 220 determines the radio communication quality based on whether the value of the preliminary fault state (hereinafter, fault count) and the value of the preliminary dangerous state (hereinafter, warning count) are equal to or greater than a predetermined number. Here, the fault count and the warning count may be integers greater than or equal to 0.

That is, in the radio communication quality diagnosis step (S400), the quality diagnosis unit 220 performs a final determination on the radio communication quality when the result of counting the state in which the compensated RSSI is out of the reference range is greater than or equal to a predetermined number of times, that is, when the preliminary dangerous state or preliminary fault state is maintained for a predetermined period of time, thereby improving the accuracy of the diagnosis on the radio communication quality. For example, even when the compensated RSSI is less than or equal to the first reference value and exceeds the second reference value, when the warning count is not greater than or equal to a predetermined number (for example, 3), the radio communication may be determined not to be in a 'dangerous state'.

According to an exemplary embodiment, the radio communication quality diagnosis step (S400) may include a step (S420) of receiving the compensation RSSI from the preprocessing unit 210 by the quality diagnosis unit 220, a step (S432) of diagnosing that the quality of wireless communication is in the normal state when the compensation RSSI exceeds the first reference value (S431), a step (S441) of increasing the warning count by 1 when the compensation RSSI is less than or equal to the first reference value, a step (S443) of diagnosing that the quality of wireless communication is in the dangerous state when the warning count is greater than or equal to a predetermined number, a step (S452) of increasing the fault count by 1 when the compensation RSSI is /less than the second reference value that is less than the first reference value (S451), and a step (S454) of diagnosing that the quality of wireless communication is in the fault state when the fault count is greater than or equal to a predetermined number (S453). Here, the predetermined number for the warning count and fault count can be set by the user and stored in the storage unit 230.

For example, it is assumed that the first reference value is -80dBm, the second reference value is -85dBm, the predetermined number N is 3, and both the warning count and fault count currently recorded in the storage unit 230 are 2.

In the above example, when the preprocessing unit 210 determines that the compensated RSSI is -83dBm, the quality diagnosis unit 220 may increase the warning count to 3 and then diagnose that the radio communication is in the 'dangerous state'.

Alternatively, in the above example, when the preprocessing unit 210 determines that the compensated RSSI is -83dBm, the quality diagnosis unit 220 may increase the warning count to 3, increase the fault count to 3, and then diagnose that the radio communication is in the 'fault state'.

Meanwhile, the above-described method can be written as a program that may be executed on a computer, and can be implemented in a general-purpose digital computer that operates the programs using a computer-readable recording medium. The computer-readable recording medium may include a magnetic storage medium such as ROM, RAM, USB, floppy disk, or hard disk, or a storage medium such as an optical readable medium such as CD-ROM or DVD.

It should be interpreted that the scope of the present disclosure is defined by the following claims rather than the above-mentioned detailed description and all modifications or alterations deduced from the meaning, the scope, and equivalences of the claims are included in the scope of the present disclosure.

## Claims

1. A battery management system, comprising:
a communication unit that receives a radio signal including battery information;
a received signal strength indicator RSSI measurement unit that measures the RSSI of the radio signal;
a preprocessing unit that calculates an average for the RSSI for each measurement cycle and calculates a moving average for each measurement cycle based on averages for a predetermined number of measurement cycles for each measurement cycle to derive a compensated RSSI; and
a quality diagnosis unit that diagnoses radio communication quality based on the compensated RSSI.

2. The battery management system of claim 1, wherein:
the communication unit
transmits the radio signal to the RSSI measurement unit when the number of battery information divided into unit packets is greater than or equal to a reference number.

3. The battery management system of claim 1, wherein:
the preprocessing unit,
when a missing value for the RSSI occurs in a first measurement cycle for each measurement cycle,
calculates an average for RSSI of the first measurement cycle as an average value of a first average before the first measurement cycle and a second average after the first measurement cycle.

4. The battery management system of claim 1, wherein:
the preprocessing unit
increases a fail count by 1 when there is no RSSI received from the RSSI measurement unit for each measurement cycle, and decreases the fail count by 1 when there is RSSI received from the RSSI measurement unit for each measurement cycle.

5. The battery management system of claim 4, wherein:
the quality diagnose unit
diagnoses that a communication error has occurred when the fail count is equal to or greater than a predetermined number.

6. The battery management system of claim 1, wherein:
the quality diagnosis unit
diagnoses that radio communication quality is in a normal state when the compensated RSSI exceeds a first reference value.

7. The battery management system of claim 1, wherein:
the quality diagnosis unit
diagnoses that radio communication quality is in a dangerous state when a pre-danger state in which the compensated RSSI is less than or equal to the first reference value and exceeds a second reference value that is less than the first reference value is maintained for a predetermined period of time.

8. The battery management system of claim 1, wherein:
the quality diagnosis unit
diagnoses that the radio communication quality is in a fault state when a preliminary fault state in which the compensated RSSI is less than or equal to a second reference value is maintained for a predetermined period of time.

9. A diagnostic method for radio communication quality, comprising:
receiving, by a communication unit, a radio signal including battery information;
measuring, by a received signal strength indicator RSSI measurement unit, the RSSI of the radio signal;
calculating, by a preprocessing unit, an average for the RSSI for each measurement cycle and calculates a moving average for each measurement cycle based on averages for a predetermined number of measurement cycles for each measurement cycle to derive a compensated RSSI; and
diagnosing, by a quality diagnosis unit, radio communication quality based on the compensated RSSI.

10. The diagnostic method of claim 9, wherein:
the receiving of the radio signal includes
transmitting the radio signal to the RSSI measurement unit when the number of battery information divided into unit packets is greater than or equal to a reference number.

11. The diagnostic method of claim 9, wherein:
the deriving of the compensated RSSI includes
calculating an average for RSSI of the first measurement cycle as an average value of a first average before the first measurement cycle and a second average after the first measurement cycle when a missing value for the RSSI occurs in the first measurement cycle for each measurement cycle.

12. The diagnostic method of claim 9, wherein:
the deriving of the compensated RSSI includes
increasing a fail count by 1 when there is no RSSI received from the RSSI measurement unit for each measurement cycle; and
decreasing a fail count by 1 when there is RSSI received from the RSSI measurement unit for each measurement cycle.

13. The diagnostic method of claim 12, wherein:
the diagnosing of the radio communication quality includes diagnosing that a communication error has occurred when the fail count is equal to or greater than a predetermined number.

14. The diagnostic method of claim 9, wherein:
the diagnosing of the radio communication quality includes
diagnosing that radio communication quality is in a normal state when the compensated RSSI exceeds a first reference value;
increasing a warning count by 1 when the compensated RSSI is less than or equal to the first reference value;
diagnosing that the radio communication quality is in a dangerous state when the warning count is greater than or equal to a predetermined number;
increasing a fault count by 1 when the compensated RSSI is less than or equal to a second reference value that is less than the first reference value; and
diagnosing that the radio communication quality is in a fault state when the fault count is greater than or equal to the predetermined number.
